# EUROPÄISCHE PATENTSCHRIFT

(11) **EP 0 738 629 B1**
(45) Veröffentlichungstag und Bekanntmachung des Hinweises auf die Patenterteilung: **04.08.1999**
(21) Anmeldenummer: 95120414.8
(22) Anmeldetag: 22.12.1995
(51) Int. Cl.: B60R 21/13

(54) **Personenkraftwagen, insbesondere Cabriolet mit einem Überrollschutz**
Automotive vehicle, in particular convertible, with a rollover protection
Véhicule automobile, en particulier cabriolet, avec arceau de sécurité

(30) Priorität: 20.04.1995 DE 19514551
(43) Veröffentlichungstag der Anmeldung: 23.10.1996
(73) Patentinhaber: Bayerische Motoren Werke Aktiengesellschaft, 80788 München (DE)
(72) Erfinder: Banda, Ruth, D-80933 München (DE); Speth, Bernhard, D-85283 Geroldshausen (DE); Lehr, Werner, D-82110 Germering (DE); Aigner, Martin, verstorben (DE)

(56) Entgegenhaltungen:
- EP-A- 0 189 819
- DE-A- 3 427 537
- DE-A- 3 723 378
- DE-A- 3 802 520
- DE-A- 4 341 499
- DE-C- 4 130 470
- DE-C- 4 241 054
- PATENT ABSTRACTS OF JAPAN vol. 018, no. 653 (M-1720), 12.Dezember 1994 & JP-A-06 255372 (NISSAN SHATAI CO LTD), 13.September 1994,

## Beschreibung

Die Erfindung bezieht sich auf einen Personenkraftwagen, insbesondere ein Cabriolet, mit einem Überrollschutz nach dem Oberbegriff des Patentanspruches 1.

Ein bekanntes derartiges Fahrzeug (DE-A-37 23 378) ist im Heckbereich seitlich und hinter dem Verdeckkasten mit einem vertikal verschiebbaren Überrollbügel versehen, der auch zum Abstützen und Halten von Transportgut verwendet werden kann.

Aus der EP-A-0 189 819 ist es außerdem bekannt, in einer Fahrzeugtür eine besondere Stützstrebe anzuordnen, die bei geschlossener Tür an dem oberen Ende des Karosserie-A-Pfostens angreift und das Cabriolet im Bereich des Frontscheibenrahmens für den Fall eines Überschlags versteift.

Es sind weitere Fahrzeuge bekannt, die im Heckbereich mit einem oder mehreren Überrollbügeln versehen sind. Aus der DE-C-37 12 940 ist beispielsweise ein U-förmiger, über annähernd die Fahrzeugbreite reichender und um eine Querachse schwenkbarer Überrollbügel bekannt, während aus der DE-C-39 25 513 eine weitere Lösung mit zwei jeweils um eine Längsachse schwenkbaren Bügeln hervorgeht. Es ist auch schon vorgeschlagen worden (DE-C-42 41 054), die Mittelsäule eines Personenkraftwagens etwa in Höhe der Gürtellinie zu teilen und den oberen Teil im Normalfall in die Mittelsäule zu versenken und im Fall eines Überschlags auszufahren und mit dem Dachrahmen zu verriegeln.

Ebenfalls bekannt ist es (DE-A-34 27 537), im hinteren Türbereich verlagerbare Streben abzustützen, die in Ruhelage innerhalb des Türkörpers liegen und im Überschlagsfall über die Türoberkante nach oben schwenken und nach Verriegelung den A-Pfosten abstützen. Eine solche Bauart erhöht das Türgewicht ganz erheblich und setzt ferner voraus, daß auch die Türschlösser im Falle eines Überschlags den zusätzlichen Belastungen standhalten.

Der Erfindung liegt die Aufgabe zugrunde, einen Personenkraftwagen, insbesondere ein Cabriolet, mit einem Überrollschutz nach dem Oberbegriff des Patentanspruches 1 zu schaffen, mit dem im Falle eines Überschlags auch im Bereich der Windschutzscheibe eine gute Abstützung des Personenkraftwagens möglich ist.

Diese Aufgabe wird erfindungsgemäß durch die im Patentanspruch 1 angegebenen Maßnahmen gelöst.

Weitere vorteilhafte Einzelheiten sind Gegenstand von Unteransprüchen.

Dadurch, daß die Stützelemente im Bereich der A-Säulen vorgesehen sind, wird insbesondere im Bereich der Vordersitze, die bei Cabriolets eine wesentlich höhere Belegungsrate als die Hintersitze haben, ein Überlebensraum geschaffen, der gegenüber den hierzu häufig schon wesentlich versteiften Windschutzscheibenrahmen noch mehr Sicherheit bietet. Insbesondere bei den zunehmend flacher werdenden Windschutzscheiben ist es schwierig, den Windschutzscheibenrahmen so steif zu gestalten, daß er den bei einem Überschlag auftretenden Belastungen standhält. In Ruhelage sind die im Bereich der A-Säulen vorgesehenen Stützelemente in die Fahrzeugkontur versenkt und stören den ästhetischen Gesamteindruck nicht.

Aus der EP-A-0 051 100 ist es zwar schon bekannt, den Überrollbügel eines Traktors aus einer horizontalen Lage, in der er seitlich um die Motorhaube herumgeführt ist, in eine vertikale Lage zu verstellen. Die Verstellung erfolgt dabei willkürlich mit Hilfe von Hydraulikzylindern. Der Überrollbügel dürfte in Längsrichtung des Traktors etwa im Bereich des Schwerpunkts des Traktors gelagert sein. Für automatisch aufrichtbare Überrollbügel, die in Sekundenbruchteilen in ihre Wirkstellung gelangen müssen, ist die Konstruktion offensichtlich nicht geeignet. Die Frage, einen Überrollbügel im Bereich der A-Säule vorzusehen, stellt sich bei dem vorbekannten Traktor nicht, da er keine Rahmenstruktur aufweist, die unter anderem auch eine A-Säule hat.

Die Erfindung ist im folgenden anhand zweier in der Zeichnung dargestellter Ausführungsbeispiele näher erläutert. Es zeigt
- Fig. 1: eine Seitenansicht auf ein Cabriolet mit einem in der ausgefahrenen Stützlage befindlichen Stützelement;
- Fig. 2: eine Draufsicht auf das Cabriolet nach Fig. 1;
- Fig. 3: eine Vorderansicht auf das Cabriolet nach den Figuren 1 und 2;
- Fig. 4 bis Fig 6: den Figuren 1 bis 3 entsprechende Ansichten eines weiteren Ausführungsbeispiels.

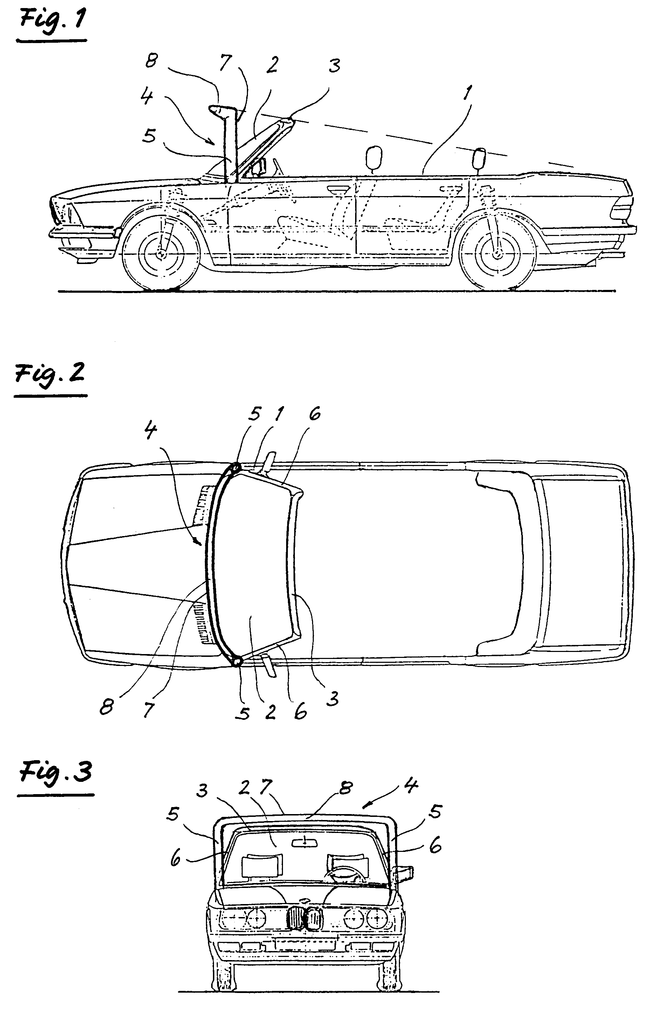

Das in den Figuren 1 bis 3 dargestellte viersitzige Cabriolet ist mit dem voll versenkten Verdeck wiedergegeben. Über die Brüstungslinie 1 ragt einerseits die Frontscheibe 2, die in einem Frontscheibenrahmen 3 gehalten ist. Über die Brüstungslinie 1 ragt in dem dargestellten ausgefahrenen Zustand weiterhin ein Überrollschutz 4. Der Überrollschutz 4 ist in wenigen Bruchteilen von Sekunden aus einer in die Fahrzeugkontur abgesenkten Ruhelage (nicht dargestellt) in die dargestellte Stützlage verlagerbar, in der er gegenüber der restlichen Fahrzeugstruktur verriegelt ist. Das Ausfahren erfolgt gesteuert durch einen Überroll-Sensor, der den Beginn eines Fahrzeug-Überschlags erkennt und eine mechanische, elektrische, pyrotechnische oder hydraulische Antriebseinrichtung aktiviert und eine Arretierung des eingefahrenen Überrollschutzes 4 löst.

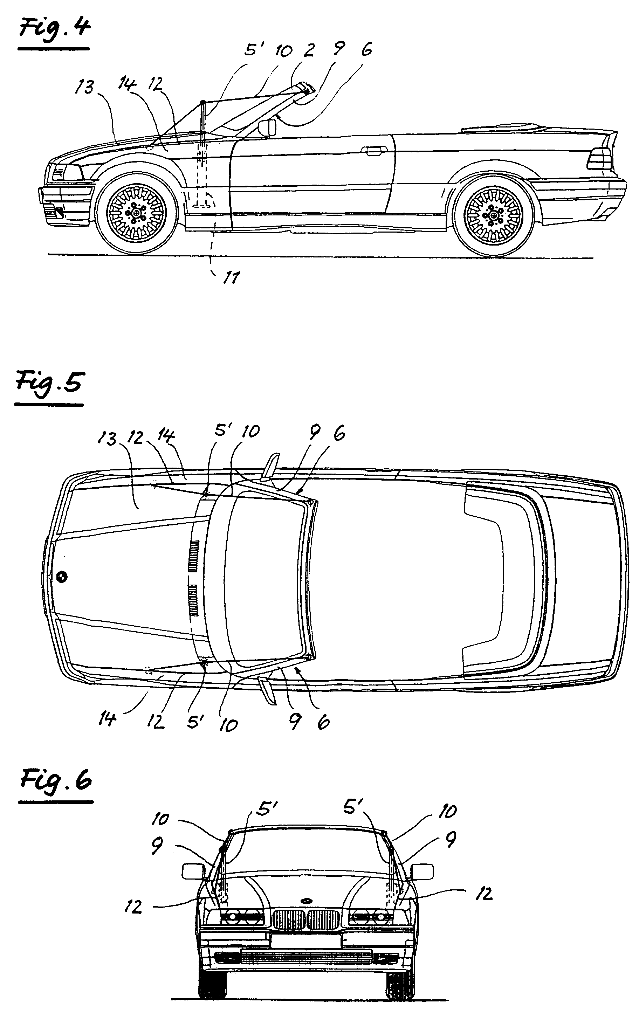

Die den Überrollschutz 4 vertikal abstützenden Stützelemente 5 sind im Bereich der A-Säulen 6 des Cabriolets vorgesehen. Sie reichen in der aus den Figuren 1 und 3 ersichtlichen ausgefahrenen Stellung etwas über die Höhe der vorderen, die A-Säulen oberhalb der Brüstungslinie 1 bildenden Dachpfosten. Sie können aus der Ruhelage rotatorisch in die Stützlage verlagerbar sein. Bei dem dargestellten Ausführungsbeispiel sind die Stützelemente 5 im wesentlichen translatorisch verlagerbar, und zwar im wesentlichen in vertikaler Richtung. Hierzu sind im Fahrzeugaufbau Führungsrohre integriert, in denen die Stützelemente 5 teleskopisch verschiebbar sind. Sie sind in der eingefahrenen, nicht sichtbaren Stellung gegenüber dem Fahrzeugaufbau verriegelt und in der ausgefahrenen Stützlage ebenfalls gegenüber dem Fahrzeugaufbau verriegelt.

Bei dem dargestellten Ausführungsbeispiel bilden die Stützelemente 5 die seitlichen Schenkel eines U-förmigen Überrollbügels 7. Die seitlichen Schenke sind durch einen Quersteg 8, der im wesentlichen horizontal verläuft und der Fahrzeugkontur angepaßt ist, miteinander verbunden.

Bei ausgefahrenem und verriegeltem Überrollbügel kann das sich überschlagende Cabriolet sehr wirkungsvoll im Bereich der A-Säulen und im Bereich des Windschutzscheibenrahmens 3 gegen Eindrücken abgestützt werden. Es bildet sich der in Fig. 1 in strichlierten Linien angedeutete Überlebensraum für die Fahrzeuginsassen.

Der Quersteg 8 ist in Ruhestellung im Bereich des Windlaufs unterhalb der Frontscheibe in die Karosseriekontur versenkt und stört damit den ästhetischen Gesamteindruck des Fahrzeugs nicht. In dieser Stellung ist der Quersteg 8 vor den Scheibenwischerachsen angeordnet.

Während bei dem Ausführungsbeispiel nach den Figuren 1 bis 3 der Überrollschutz 4 zusätzlich zu den Dachpfosten zur Wirkung kommt, kann es ferner zweckmäßig sein, daß die Stützelemente 5' im ausgefahrenen Zustand die vorderen Dachpfosten 9 abstützen. Dies kann gemäß Figuren 4 bis 6 beispielsweise in der Weise erfolgen, daß Spannseile 10 vorgesehen sind, die in Ruhestellung verdeckt angeordnet sind und in der ausgefahrenen Lage der Stützelemente 5' zwischen deren oberen Bereich und dem oberen Bereich der vorderen Dachpfosten 9 gespannt sind. Bei den Spannseilen 10 handelt es sich um hoch belastbare Stahlseile, deren eines Ende am oberen Ende der Dachpfosten 9 fest verankert ist. Bei dem dargestellten Ausführungsbeispiel ist jedes Spannseil 10 über das jeweilige Stützelement 5' hinaus nach vorne verlängert und erstreckt sich bis zum mittleren seitlichen Bereich der Vorderwagenstruktur, wo es mit seinem anderen Ende fest verankert ist. In dem dazwischenliegenden Bereich ist das Spannseil 10 über eine Durchlauföse mit dem oberen Ende eines Stützelements 5' verbunden. Die Stützelemente 5' sind teleskopisch aus in Fig. 4 angedeuteten Führungsrohren 11 annähernd vertikal so weit nach oben ausfahrbar und dann verriegelbar, daß die Spannseile 10 straff gespannt sind. Der Antrieb der Stützelemente 5' kann dabei ebenso wie beim Überrollschutz 4 nach den Figuren 1 bis 3 durch Federkraft, elektrisch, pyrotechnisch oder hydraulisch oder auf eine weitere geeignete Weise erfolgen. Im ausgefahrenen Zustand bewirken die Stützelemente 5' über die Spannseile 10 eine sehr wirksame Abstützung der vorderen Dachpfosten 9 bzw. der A-Säulen, so daß im Falle eines Überschlags dem Einknicken dieser Dachpfosten begegnet werden kann.

Die Spannseile 10 sind in Ruhelage - bei nicht ausgefahrenen Stützelementen 5' - jeweils in der seitlichen Dichtung der Frontscheibe 2 sowie in den Fugen 12 zwischen der Motorhaube 13 und der Seitenwand 14 aufgenommen.

Die Stützelemente könnten in Ruhelage auch in den A-Säulen 6 angeordnet und zum Verlagern in die Stützlage um ihren unteren Bereich nach vorne schwenkbar und dann verriegelbar sein.

## Patentansprüche

1. Personenkraftwagen, insbesondere Cabriolet, mit einem Überrollschutz (4) der sensorgesteuert aus einer abgesenkten Ruhelage in eine über die Fahrzeug-Brüstungslinie nach oben gerichtete Stützlage verlagerbar ist, in der er gegenüber dem Fahrzeug-Aufbau verriegelbar ist,
dadurch gekennzeichnet, daß den Überrollschutz (4) vertikal abstützende Stützelemente (5, 5') im Bereich der A-Säulen (6) des Fahrzeugs vor den Türen vorgesehen sind.

2. Personenkraftwagen nach Anspruch 1,
dadurch gekennzeichnet, daß die Stützelemente (5, 5') im ausgefahrenen Zustand zumindest annähernd bis in Höhe der vorderen Dachpfosten reichen.

3. Personenkraftwagen nach Anspruch 1,
dadurch gekennzeichnet, daß die Stützelemente rotatorisch aus der Ruhelage in die Stützlage verlagerbar sind.

4. Personenkraftwagen nach Anspruch 1,
dadurch gekennenzeichnet, daß die Stützelemente (5, 5') im wesentlichen translatorisch verlagerbar sind.

5. Personenkraftwagen nach Anspruch 1,
dadurch gekennzeichnet, daß die Stützelemente (5) die seitlichen Schenkel eines etwa U-förmigen Überrollbügels (7) bilden, die durch einen Quersteg (8) miteinander verbunden sind.

6. Personenkraftwagen nach Anspruch 5,
dadurch gekennzeichnet, daß der Quersteg (8) in Ruhestellung im Bereich des Windlaufs unterhalb der Frontscheibe (2) in die Karosserie-Kontur versenkt ist.

7. Personenkraftwagen nach Anspruch 6,
dadurch gekennzeichnet, daß der Quersteg (8) in Ruhestellung vor den Scheibenwischer-Achsen angeordnet ist.

8. Personenkraftwagen nach Anspruch 1,
dadurch gekennzeichnet, daß die Stützelemente (5') im ausgefahrenen Zustand die vorderen Dachpfosten (9) abstützen.

9. Personenwagen nach Anspruch 8,
dadurch gekennzeichnet, daß Spannseile (10) vorgesehen sind, die in Ruhestellung verdeckt angeordnet sind und in der ausgefahrenen Lage der Stützelemente (5') zwischen deren oberem Bereich und dem oberen Bereich der vorderen Dachpfosten (9) gespannt sind.

10. Personenkraftwagen nach Anspruch 9,
dadurch gekennzeichnet, daß die Spannseile (10) vom oberen Bereich der Stützelemente (5') sich zumindest bis zum mittleren seitlichen Bereich der Vorderwagenstruktur erstrecken und dort verankert sind.

11. Personenkraftwagen nach Anspruch 10,
dadurch gekennzeichnet, daß die Spannseile (10) in Ruhelage in der seitlichen Dichtung der Frontscheibe (2) und in den Fugen (12) zwischen Motorhaube (13) und Seitenwand (14) aufgenommen sind.

12. Personenkraftwagen nach Anspruch 8,
dadurch gekennzeichnet, daß die Stützelemente in Ruhelage in den A-Säulen (6) angeordnet und zum Verlagern in die Stützlage um ihren unteren Endbereich nach vorne schwenkbar und dann verriegelbar sind.

## Claims

1. A passenger car, especially a convertible, comprising a roll-over protective structure (4) movable under the control of a sensor from a lowered inoperative position into an upwardly directed bracing position above the vehicle parapet line, in which it can be locked to the vehicle body, characterised in that the roll-over protective structure (4) comprises vertical bracing elements (5, 5') in the region of the A-columns (6) of the vehicle in front of the doors.

2. A passenger car according to claim 1,
characterised in that the bracing elements (5, 5') when extended reach at least approximately up to the height of the front roof uprights.

3. A passenger car according to claim 1,
characterised in that the bracing elements are movable by rotation from the inoperative position into the bracing position.

4. A passenger car according to claim 1,
characterised in that the bracing elements (5, 5') are movable substantially in translation.

5. A passenger car according to claim 1,
characterised in that the bracing elements (5) are the side arms of an approximately U-shaped roll bar (7), and are connected to one another by a cross-member (8).

6. A passenger car according to claim 5,
characterised in that in the inoperative position the cross-member (8) is lowered into the body contour in the region of the apron underneath the front window (2).

7. A passenger car according to claim 6,
characterised in that in the inoperative position the transverse member (8) is disposed in front of the windscreen-wiper pivots.

8. A passenger car according to claim 1,
characterised in that when extended, the bracing elements (5') support the front roof uprights (9).

9. A passenger car according to claim 8,
characterised in that bracing wires (10) are provided and are covered in the inoperative position whereas when the bracing elements (5') are in the extended position the bracing wires are clamped between the upper region of the bracing elements and the upper region of the front roof uprights (9).

10. A passenger car according to claim 9,
characterised in that the bracing wires (10) extend from the upper region of the bracing elements (5') at least to the central side region of the front-car structure and are anchored there.

11. A passenger car according to claim 10,
characterised in that in the inoperative position, the bracing wires (10) are received in the side seal on the front window (2) and in the joints (12) between the bonnet (13) and the side wall (14).

12. A passenger car according to claim 8,
characterised in that the in the inoperative position the bracing elements are disposed in the A-columns (6) and are pivotable forward around their bottom end region into the bracing position and are then lockable.

## Revendications

1. Voiture particulière, en particulier cabriolet, avec une protection de sécurité en cas de renversement (4) déplaçable, sous la commande, d'un capteur d'une position de repos abaissée en une position d'appui orientée vers le haut, au-dessus de la ligne de caisse du véhicule, position d'appui dans laquelle il est verrouillable par rapport à la carrosserie du véhicule,
caractérisée en ce que
les éléments d'appui (5, 5') soutenant verticalement l'arceau de sécurité (4) sont prévus dans la zone des colonnes A (6) du véhicule, devant les portes.

2. Voiture particulière selon la revendication 1,
caractérisée en ce que
les éléments d'appui (5, 5'), lorsqu'il sont à l'état déployé, arrivent au moins à peu près jusqu'à hauteur des montants de toit avant.

3. Voiture particulière selon la revendication 1,
caractérisée en ce que
les éléments d'appui sont déplaçables de façon rotative, de la position de repos à la position d'appui.

4. Voiture particulière selon la revendication 1,
caractérisée en ce que
les éléments d'appui (5, 5') sont déplaçables sensiblement en translation.

5. Voiture particulière selon la revendication 1,
caractérisée en ce que
les éléments d'appui (5) constituent les branches latérales, reliées ensemble par une nervure transversale (8), d'un arceau de sécurité en cas de renversement (7) à peu près en forme de U.

6. Voiture particulière selon la revendication 5,
caractérisée en ce que
la nervure transversale (8), dans la position de repos, est escamotée dans la zone de l'auvent, au-dessous du pare-brise (2) dans le contour de carrosserie.

7. Voiture particulière selon la revendication 6,
caractérisée en ce que
la nervure transversale (8), dans la direction de la position de repos, est disposée devant les axes d'essuieglace.

8. Voiture particulière selon la revendication 1,
caractérisée en ce qu'
à l'état déployé, les éléments d'appui (5') soutiennent les montants de toit avant (9).

9. Voiture particulière selon la revendication 8, caractérisée en ce que
des câbles de haubanage (10) sont prévus, disposés cachés, en position de repos, et qui, dans la position déployée des éléments d'appui (5'), sont tendus entre leur zone supérieure et la zone supérieures des montants de toit avant (9).

10. Voiture particulière selon la revendication 9,
caractérisée en ce que
les câble de haubanage (10) s'étendent de la zone supérieure des éléments d'appui (5') au moins jusqu'à la zone latérale médiane de la structure avant de la voiture et sont ancrés à cet endroit.

11. Voiture particulière selon la revendication 10, caractérisée en ce que
les câbles de haubanage (10), dans la position de repos, sont logés dans le joint d'étanchéité latéral du parebrise (2) et dans les joints (12) prévus entre le capot moteur (13) et la paroi latérale (14).

12. Voiture particulière selon la revendication 8,
caractérisée en ce que
les éléments d'appui, en position de repos, sont disposés dans les colonnes A (6) et sont susceptibles de pivoter vers l'avant, autour de leur zone d'extrémité inférieure, et d'y être verrouillés pour se déplacer à la position d'appui.
